# FASCICULE DE BREVET EUROPEEN

(11) **EP 2 450 494 B1**
(45) Date de publication et mention de la délivrance du brevet: **07.06.2017**
(21) Numéro de dépôt: 11306455.4
(22) Date de dépôt: 08.11.2011
(51) Int. Cl.: E04B 1/80, F16L 59/02, B32B 7/08, E04B 1/76

(54) **Isolant multicouche**
Mehrschichtiges Isolationsmaterial
Multilayer insulator

(30) Priorité: 09.11.2010 FR 1059245
(43) Date de publication de la demande: 09.05.2012
(73) Titulaire: ATI Groupe, 01700 Beynost (FR); RTK, 01700 Beynost (FR)
(72) Inventeur: Froidure, Thierry, 01330 AMBERIEUX EN DOMBES (FR)
(74) Mandataire: Cabinet Laurent & Charras

(56) Documents cités:
- EP-A1- 1 353 018
- WO-A2-2010/100440
- FR-A1- 2 909 747
- FR-A1- 2 936 583
- GB-A- 2 310 273
- US-A1- 2002 098 316
- US-A1- 2003 157 302

## Description

### DOMAINE TECHNIQUE

La présente invention se rapporte au domaine des isolants multicouche destinés notamment à l'isolation intérieure d'un bâtiment, tel qu'un logement ou un bureau. Ainsi, un tel type d'isolant peut être utilisé en toiture ou être agencé le long d'une paroi de façon à isoler l'intérieur du bâtiment.

L'invention vise plus particulièrement un isolant multicouche destiné à être agencé sur une toiture, et permettant de réaliser également une étanchéité à l'eau ou à l'air extérieurs, et présentant une haute perméabilité à la vapeur d'eau contenue dans le logement ou l'habitation.

### ART ANTERIEUR

De façon générale, et tel que décrit par le Demandeur dans le document FR°2 909 747, ce type d'isolant multicouche comporte une pluralité de feuilles de matières isolantes et de films ou grilles réfléchissantes de façon à isoler thermiquement un logement ou plus généralement un bâtiment. Lorsque ces isolants multicouche sont positionnés sur une couverture, un écran hautement perméable à la vapeur est généralement utilisé en supplément et celui-ci est positionné de manière indépendante entre des contre-liteaux et des liteaux. Ainsi, on forme une lame d'air entre l'isolant multicouche et l'écran hautement perméable à la vapeur (HPV) agencé au-dessus.

Un tel mode de réalisation génère ainsi un nombre important d'opérations pour sa mise en oeuvre et est donc complexe à réaliser pour le couvreur, qui doit recouvrir la totalité des chevrons de la toiture avec l'isolant multicouche puis rapporter des contre-liteaux avant de pouvoir positionner l'écran HPV sur toute la surface de la toiture.

Par suite, il a été imaginé de solidariser un écran HPV avec un isolant multicouche. De tels produits ont été réalisés en collant simplement un écran HPV sur un isolant multicouche classique. Cependant, un tel complexe ne permet pas de réaliser une perméabilité à la vapeur d'eau globale qui soit suffisamment faible pour permettre de qualifier l'ensemble constitué par l'isolant multicouche et l'écran HPV, comme étant hautement perméable à la vapeur. En effet, les couches de film réflecteur contenues dans un tel complexe sont par nature totalement imperméables à la vapeur d'eau. Le complexe est cependant faiblement perméable à la vapeur d'eau grâce à des points de couture traversant les différentes couches de l'isolant et permettant de les solidariser entre elles.

Cependant, de tels points de couture sont localement répartis en ligne et ne présentent pas une dispersion suffisamment importante de façon à permettre de rendre globalement hautement perméable à la vapeur le complexe formé par la combinaison de l'écran HPV et de l'isolant multicouche avec lequel il est solidarisé par collage.

D'autres solutions ont également été envisagées. Par exemple, le document FR 2 936 583 décrit un panneau d'isolation thermique et/ou phonique constitué d'une plaque rigide et d'élément d'isolation rapportés à la surface. Un tel panneau d'isolation comporte des parements réfléchissants perméables à la vapeur d'eau, positionnés de part et d'autre d'une couche centrale ajourée d'isolation thermique. Le document GB 2 310 273 décrit, quant à lui, un panneau d'isolation flexible formé par deux feuilles en tissus élastique solidarisées entre elles par couture au niveau de leurs bordures respectives. Enfin, le document WO 2010/100440 décrit un isolant multicouche formé d'un empilement de couches disposé entre deux couches externes en matériau perméable à la vapeur et solidarisées entre elles par collage. Cependant, ces solutions restent insuffisant tant au niveau de la perméabilité à la vapeur que dans la solidité des structures.

Ainsi, le but de l'invention est de réaliser un isolant multicouche simple et rapide à mettre en oeuvre sur une toiture, et qui présente également une imperméabilité à l'eau et à l'air extérieur, avec une haute perméabilité à la vapeur d'eau contenue dans le bâtiment.

### EXPOSE DE L'INVENTION

L'invention concerne donc un isolant multicouche destiné à réaliser une isolation thermique d'un bâtiment et comportant un écran hautement perméable à la vapeur d'eau contenue dans le bâtiment, au moins un mat formé dans un matériau isolant et une première grille réflectrice.

Selon l'invention, l'isolant multicouche comporte également au moins un fil de couture permettant de solidariser les lisières de l'écran hautement perméable à la vapeur d'eau avec des lisières en regard de la première grille réflectrice, de façon à former une poche de type coussin à l'intérieur de laquelle le au moins un mat est positionné, et en ce que la grille réflectrice comporte des perforations permettant à la vapeur d'eau contenue dans le bâtiment de traverser l'isolant multicouche.

Autrement dit, l'écran HPV est solidarisé par couture au niveau d'au moins une lisière longitudinale avec la première grille réflectrice et permet de former une enveloppe à l'intérieur de laquelle au moins un mat de matériau isolant est positionné. Par suite, l'écran HPV et la première grille réflectrice peuvent comporter des dimensions supérieures au mat de matériau isolant de façon à permettre le positionnement du mat à l'intérieur de la poche de type coussin. Bien entendu, les couches de l'isolant formé par l'écran HPV, le mat de matériau isolant et la première grille réflectrice sont superposées les unes sur les autres de façon sensiblement parallèle.

Par ailleurs, la grille présente des perforations permettant à la vapeur d'eau contenue dans le bâtiment de traverser l'isolant multicouche et ainsi de conférer à l'isolant multicouche les caractéristiques d'un écran HPV, c'est-à-dire permettant de réaliser une étanchéité à l'eau, à l'air et au vent avec le milieu extérieur et la perméabilité à la vapeur d'eau contenue dans le bâtiment. Selon l'invention, l'isolant multicouche comporte une seconde grille réflectrice comportant des perforations, cette seconde grille réflectrice étant agencée entre l'écran hautement perméable à la vapeur et la première grille réflectrice, et solidarisée par couture longitudinale avec, d'une part, l'écran hautement perméable à la vapeur, et d'autre part, la première grille réflectrice de façon à former la poche.

En d'autres termes, la poche est formée d'un côté par deux couches constituées par l'écran HPV et la seconde grille réflectrice, et de l'autre côté, par la première grille réflectrice. Un tel agencement permet de conférer à l'isolant multicouche une grande résistance à la déchirure en renforçant sa structure au niveau de ses deux faces formant l'enveloppe de la poche. Le au moins un mat formé dans un matériau isolant est alors positionné entre la première et la seconde grille réflectrices.

En pratique, l'isolant multicouche peut comporter au moins un film réflecteur perforé positionné à l'intérieur de la poche.

Ainsi, un tel film réflecteur permet d'améliorer les caractéristiques d'isolation thermique de ce complexe isolant multicouche et est positionné au contact du au moins un mat formé dans un matériau isolant. De plus, les perforations ménagées dans le film réflecteur permettent à la vapeur d'eau présente dans le bâtiment de s'échapper au travers de cet isolant multicouche. Un tel film réflecteur n'est donc pas cousu avec le mat isolant de l'isolant multicouche.

Selon un mode de réalisation particulier, les perforations des première et seconde grilles réflectrices et du film réflecteur peuvent présenter un diamètre compris entre 0,4 et 1,2 mm.

Une telle dimension des perforations est ainsi apte à permettre le passage de la vapeur d'eau contenue dans le bâtiment, sans être néfaste à l'isolation thermique d'un tel isolant multicouche.

Avantageusement, les perforations des première et seconde grilles réflectrices et du film réflecteur peuvent être réparties sur chacune des différentes couches selon une dispersion moyenne comprise entre 4 et 10 perforations/cm².

Une telle dispersion moyenne des perforations réalisées dans les première et seconde grilles réflectrices et film réflecteur, permet ainsi d'assurer une perméabilité à la vapeur d'eau optimale tout en garantissant une bonne isolation thermique de cet isolant multicouche.

En pratique, le fil de couture peut être solidarisé avec les lisières de l'écran hautement perméable à la vapeur et les lisières en regard de la première grille réflectrice, selon un point choisi parmi le groupe comportant le surjet et la couture droite.

De tels points de couture sont en effet adaptés pour solidariser entre elles des lisières et ainsi éviter une éventuelle prise au vent de l'isolant multicouche. Un tel point de couture confère également une grande tenue mécanique à un tel isolant multicouche et évite ainsi tout risque de déchirement et de désolidarisation au niveau des lisières de l'écran hautement perméable à la vapeur et de la première grille réflectrice.

Selon un mode de réalisation particulier, l'isolant multicouche peut comporter des points de colle destinés à solidariser ponctuellement les différentes couches de l'isolant.

En effet, de cette manière, il est possible d'éviter le déplacement et le tassement des couches contenues à l'intérieur de la poche formant coussin. Ainsi, les différentes couches peuvent être solidarisées entre elles à l'intérieur du coussin, mais également avec les couches externes formant l'enveloppe de la poche. Ainsi, le mat réalisé dans un matériau isolant peut être solidarisé par points de colle localement avec la première grille réflectrice et/ou l'écran hautement perméable à la vapeur.

Avantageusement, l'isolant multicouche peut comporter une perméabilité à la vapeur d'eau Sd inférieure à 0,25m.

En effet, une telle valeur de perméabilité à la vapeur d'eau de l'isolant multicouche permet de le qualifier d'hautement perméable à la vapeur d'eau, et garantit ainsi une bonne ventilation d'un bâtiment en évitant la formation de condensation à l'intérieur des pièces isolées avec ce type d'isolant multicouche.

A titre de comparaison, un écran hautement perméable à la vapeur pris indépendamment compote une valeur Sd d'environ 0.05m tandis qu'un film réfléchissant non perforé forme un film pare-vapeur ou frein-vapeur et forme ainsi une barrière imperméable à la vapeur d'eau de valeur Sd non quantifiable.

En pratique, le mat peut être formé dans un matériau choisi parmi le groupe comportant le lin, la ouate, le polyester, la laine de mouton, le chanvre.

Il peut également être formé par une combinaison de ces différents matériaux, afin de présenter des caractéristiques d'isolation thermique optimales.

Selon un mode de réalisation particulier, le mat peut comporter une densité surfacique comprise entre 50 et 200 g/m².

De même que précédemment, un tel agencement permet également de garantir une isolation thermique optimale au moyen d'un isolant multicouche conforme à cette invention.

Avantageusement, l'isolant multicouche peut comporter un film pare-vapeur agencé en regard d'une face externe de la première grille réflectrice.

En effet, pour certaines applications, notamment en sous toiture ou en doublage interne de parois, l'isolant multicouche peut être équipé d'un film pare-vapeur évitant ainsi à la vapeur d'eau contenue dans le bâtiment de venir au contact du mat isolant de l'isolant multicouche ou d'un autre matériau isolant. Un tel film pare-vapeur forme ainsi avec l'écran hautement perméable à la vapeur d'eau les deux peaux externes de l'isolant multicouche.

### DESCRIPTION SOMMAIRE DES FIGURES

La manière de réaliser l'invention ainsi que les avantages qui en découlent, ressortiront bien des modes de réalisation qui suivent, donnés à titre indicatif mais non limitatif, à l'appui des figures annexées dans lesquelles :
- la figure 1 est une vue en perspective d'un isolant multicouche conforme à l'invention ;
- les figures 2 et 3 représentent deux variantes en coupe transversale d'isolants multicouche conformes à l'invention ;
- la figure 4 représente une vue éclatée en perspective de différentes couches d'un isolant multicouche ;
- la figure 5 représente une troisième variante en coupe transversale d'un isolant multicouche conforme à l'invention.

### MANIERE DE REALISER L'INVENTION

Comme déjà évoqué, l'invention concerne un isolant multicouche destiné à réaliser une isolation thermique d'un bâtiment au niveau de sa toiture.

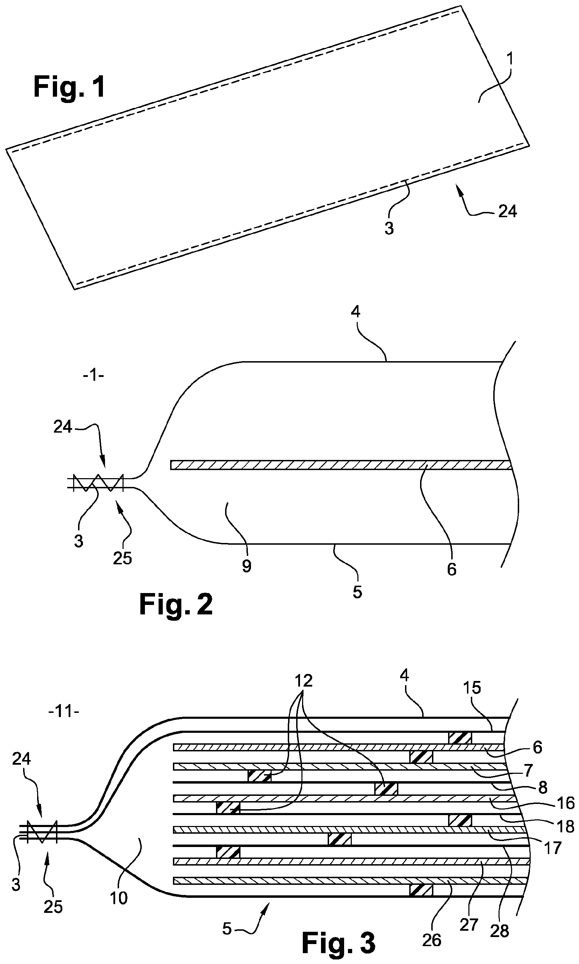

Tel que représenté à la figure 1, un tel isolant multicouche se présente sous la forme d'une pluralité de bandes de matière qu'il est possible d'enrouler autour d'une lisière de façon à faciliter le transport et le stockage de ce type d'isolant multicouche **1.** Par ailleurs, la lisière de la couche supérieure réalisée au moyen d'un écran hautement perméable à la vapeur est cousue au moyen d'un fil de couture **3** avec une autre couche de l'isolant multicouche. Un tel fil de couture **3** permet ainsi de solidariser entre elles les deux lisières longitudinales de l'isolant multicouche.

Une fois déroulé, l'isolant présente alors sensiblement une largeur de 1,5 m et une longueur d'environ 10 m.

Tel que représenté à la figure 2, l'isolant multicouche **1** comprend un écran hautement perméable à la vapeur d'eau **4,** solidarisé par couture avec une première grille réflectrice **5.** Une telle solidarisation est réalisée au niveau des lisières **24,25** agencées en regard au moyen d'un fil de couture **3.** Cette association permet ainsi de réaliser une poche **9** à l'intérieur de laquelle un mat formé dans un matériau isolant **6** est positionné. Ce mode de réalisation permet alors de réaliser un coussin d'air et garantit une isolation performante de l'isolant multicouche **1.**

Par ailleurs et selon une autre variante représentée à la figure 3, un tel isolant multicouche **11** peut également présenter une superposition d'une pluralité de couches de matériaux différents.

Ainsi, de façon à renforcer la structure de l'isolant multicouche **11,** celui-ci comporte une seconde grille réflectrice **15** agencée en regard de l'écran hautement perméable à la vapeur **4.** La lisière de la seconde grille réflectrice **15** est également solidarisée par couture au moyen du fil **3** avec les lisières **24,25** de l'enveloppe formant la poche **10.**

Tel que représenté, l'isolant multicouche **11** comporte trois couches de mat **6, 16, 26** formées avec du lin. Un tel mat peut présenter un mélange de fibres de lin avec 15 % de fibres de polyester, et être agencé sur un film de polypropylène de façon à garantir sa tenue. Un tel mat peut présenter alors une densité surfacique d'environ 150 g/m².

Par ailleurs, un tel isolant multicouche **11** peut également comporter plusieurs couches d'un mat **7, 17, 27** formé avec de la ouate synthétique. Une telle ouate est formée avec des fibres de polyester à 70 % associées avec 30 % de fibres thermo-liantes pour lier entre elles les fibres de polyester et ainsi former un mat d'une densité d'environ 100 g/m². Un tel mat présente généralement une épaisseur d'environ 12 à 14 mm.

Par ailleurs, l'isolant multicouches **11** comporte également des films réflecteurs perforés **8, 18, 28** formés dans un film de polyester d'environ **12** micromètres d'épaisseur, métallisés sous vide à l'aluminium sur une face.

Les films réflecteurs perforés ainsi que les première et seconde grilles réflectrices comportent ainsi des perforations dont le diamètre peut être d'environ 0,8 mm et la dispersion moyenne de 6,7 perforations/cm².

Les première et seconde grilles réflectrices peuvent quant à elles être formées par un film métallisé de polyester comportant une épaisseur d'environ 12 microns associé par collage avec une grille présentant une épaisseur de 7 micromètres, puis recouverte d'un film de polyéthylène comportant une épaisseur d'environ 110 micromètres.

Par ailleurs, les différentes couches de l'isolant multicouche **11** peuvent être solidarisées entre elles au moyen de points de colle **12.** Ces points de colle permettent ainsi d'immobiliser les différentes couches les unes par rapport aux autres et d'éviter un tassement de la matière à l'intérieur de la poche **10.** Les couches isolantes peuvent ainsi être solidarisées avec les couches externes **4, 5, 15** formant l'enveloppe de ladite poche **10.**

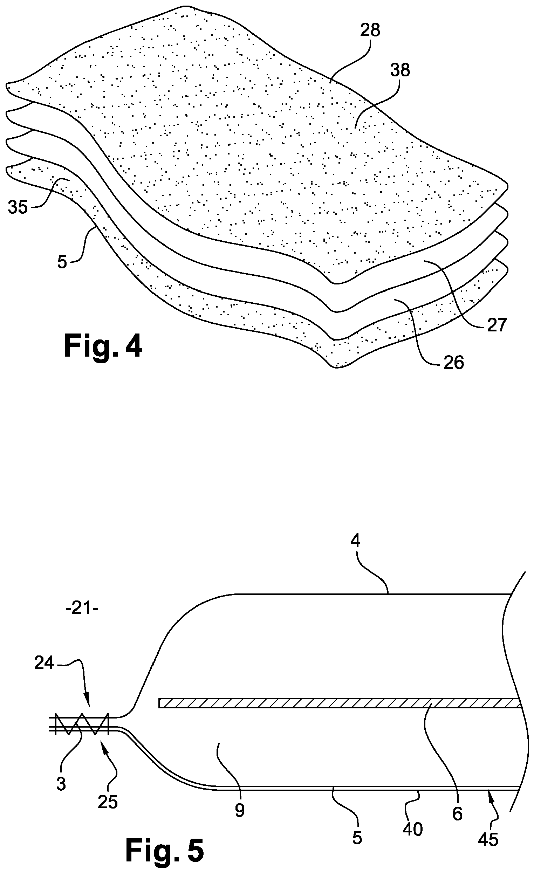

Tel que représenté à la figure 4, le film réflecteur perforé **28** et la première grille réflectrice **5** comportent des perforations **35** et **38** régulièrement réparties sur toute leur surface et permettant à la vapeur d'eau de traverser l'isolant multicouche.

Tel que représenté à la figure 5, l'isolant multicouche **21** comprend un écran hautement perméable à la vapeur d'eau **4,** solidarisé par couture avec une première grille réflectrice **5** et un film pare-vapeur **40** positionné en regard d'une face externe **45** de la première grille réflectrice **5.** Une telle solidarisation est réalisée au niveau des lisières **24,25** agencées en regard au moyen d'un fil de couture **3.**

Ainsi, selon cette variante l'isolant multicouche **21** peut empêcher la vapeur d'eau contenue dans le bâtiment de le traverser ou même de venir se loger dans un matériau isolant annexe ou préexistant dans le bâtiment.

Il ressort de ce qui précède qu'un isolant multicouche conforme à l'invention comporte de multiples avantages, et notamment :
- il permet de réaliser un complexe hautement perméable à la vapeur d'eau et étanche à l'eau et l'air extérieur ;
- il garantit ainsi une absence de condensation à l'intérieur du bâtiment qu'il équipe ;
- il réduit les temps de pose et de réalisation d'une couverture puisqu'il ne nécessite pas la pose de contre-liteaux entre l'isolant et l'écran hautement perméable à la vapeur ;
- dans certains cas particuliers, il peut permettre de stopper la vapeur d'eau contenue dans le bâtiment.

## Revendications

1. Isolant multicouche (1, 11, 21) destiné à réaliser une isolation thermique d'un bâtiment et comportant :
- un écran (4) hautement perméable à la vapeur d'eau contenue dans ledit bâtiment,
- au moins un mat (6, 7, 16, 17, 26, 27) formé dans un matériau isolant,
- une première grille réflectrice (5) comportant des perforations (35) permettant à la vapeur d'eau contenue dans le bâtiment de traverser ledit isolant multicouche (1, 11, 21),
- au moins un fil de couture (3) permettant de solidariser des lisières (24) de l'écran (4) hautement perméable à la vapeur avec des lisières (25) en regard de la première grille réflectrice (5) de façon à former une poche (9, 10) de type coussin à l'intérieur de laquelle ledit au moins un mat (6, 7, 16, 17, 26, 27) est positionné,
**caractérisé en ce qu'**il comporte une seconde grille réflectrice (15) comportant des perforations (35), ladite seconde grille réflectrice (15) étant agencée entre l'écran (4) hautement perméable à la vapeur et la première grille réflectrice (5) et solidarisée par couture longitudinale avec, d'une part, l'écran (4) hautement perméable à la vapeur, et d'autre part, la première grille réflectrice (5) de façon à former ladite poche (10).

2. Isolant multicouche selon la revendication 1, **caractérisé en ce qu'**il comporte au moins un film réflecteur perforé (8, 18, 28) positionné à l'intérieur de la poche (10) et comportant des perforations (38).

3. Isolant multicouche selon l'une des revendications 1 à 2, **caractérisé en ce que** les perforations (35, 38) desdites première et seconde grilles réflectrices (5, 15) et dudit film réflecteur (8, 18, 28) présentent un diamètre compris entre 0,4 et 1,2mm.

4. Isolant multicouche selon l'une des revendications 1 à 2, **caractérisé en ce que** les perforations (35, 38) desdites première et seconde grilles réflectrices (5, 15) et dudit film réflecteur (8, 18, 28) sont réparties sur chacune des différentes couches selon une dispersion moyenne comprise entre 4 et 10 perforations/cm².

5. Isolant multicouche selon la revendication 1, **caractérisé en ce que** ledit fil de couture (3) est solidarisé avec les lisières (24) de l'écran (4) hautement perméable à la vapeur et les lisières (25) en regard de la première grille réflectrice (5) selon un point choisi parmi le groupe comportant le surjet et la couture droite.

6. Isolant multicouche selon la revendication 1, **caractérisé en ce qu'**il comporte des points de colle (12) destinés à solidariser ponctuellement les différentes couches de l'isolant.

7. Isolant multicouche selon la revendication 1, **caractérisé en ce qu'**il comporte une perméabilité à la vapeur d'eau Sd inférieure à 0,25m.

8. Isolant multicouche selon la revendication 1, **caractérisé en ce que** ledit au moins un mat (6, 7, 16, 17, 26, 27) est formé dans un matériau choisi parmi le groupe comportant le lin, la ouate, le polyester, la laine de mouton et le chanvre.

9. Isolant multicouche selon la revendication 1, **caractérisé en ce que** ledit au moins un mat (6, 7, 16, 17, 26, 27) comporte une densité surfacique comprise entre 50 et 200 g/m².

10. Isolant multicouche selon la revendication 1, **caractérisé en ce qu'**il comporte un film frein vapeur (40) agencé en regard d'une face externe (45) de la première grille réflectrice (5).

## Patentansprüche

1. Mehrlagiges Isoliermaterial (1, 11, 21) zur Ausführung der Wärmesisolierung eines Gebäudes und umfassend:
- einen Schirm (4), hoch durchlässig gegenüber den in diesem Gebäude enthaltenen Wasserdampf,
- mindestens eine Matte (6, 7, 16, 17, 26, 27) aus einem isolierenden Material
- ein erstes reflektierendes Gitter (5), mit Perforierungen (35), die es ermöglichen, dass der im Gebäude enthaltene Wasserdampf, durch dieses mehrlagige Isoliermaterial (1, 11, 21) strömen kann.
- mindestens einen Nähfaden (3) mit dem die Kanten (24) des hoch Wasserdampfdurchlässigen Schirmes (4), mit der dem ersten reflektierenden Gitter (5) gegenüberliegenden Kante (25) fest verbunden werden können, um so einen Beutel (9, 10) vom Typ Polster zu bilden, in dem sich diese mindestens eine Matte (6, 7, 16, 17, 26, 27) befindet.
**dadurch gekennzeichnet, dass** es ein zweites reflektierendes Gitter (15), mit Perforierungen (35) enthält, dieses zweite reflektierende Gitter (15) ist angeordnet zwischen dem hoch wasserdampfdurchlässigen Schirm (4), und dem ersten reflektierenden Gitter (5), und über die Längsnaht fest verbunden mit erstens dem hoch wasserdampfdurchlässigen Schirm (4) und zweitens dem ersten reflektierenden Gitter (5), so dass dieser Beutel (10) geformt wird.

2. Mehrlagiges Isoliermaterial gemäß Anspruch 1, **dadurch gekennzeichnet, dass** es mindestens eine perforierte, reflektierende Folie (8, 18, 28) enthält, die innerhalb des Beutels (10) angeordnet ist und Perforierungen (38) enthält.

3. Mehrlagiges Isoliermaterial gemäß Anspruch 1 bis 2, **dadurch gekennzeichnet, dass** die Perforierungen (35, 38), des genannten ersten und zweiten reflektierenden Gitters (5, 15), und dieser reflektierenden Folie (8, 18, 28) einen Durchmesser zwischen 0,4 und 1,2 mm aufweisen.

4. Mehrlagiges Isoliermaterial gemäß Anspruch 1 bis 2, **dadurch gekennzeichnet, dass** die Perforierungen (35, 38), des genannten ersten und zweiten reflektierenden Gitters (5, 15), und dieser reflektierenden Folie (8, 18, 28) über jede der verschiedenen Schichten mit einer durchschnittlichen Streubreite zwischen 4 und 10 Perforierungen/ cm² verteilt sind.

5. Mehrlagiges Isoliermaterial gemäß Anspruch 1, **dadurch gekennzeichnet, dass** dieser Nähfaden (3) fest verbunden ist mit den Kanten (24) des hoch wasserdampfdurchlässigen Schirmes (4), und den Kanten (25) gegenüber dem ersten reflektierenden Gitter (5) mit einem Stich, der zur Gruppe Overlock und gerader Stich gehört.

6. Mehrlagiges Isoliermaterial gemäß Anspruch 1, **dadurch gekennzeichnet, dass** es Klebepunkte (12) enthält, mit denen die verschiedenen Lagen des Isoliermaterials punktuell verbunden werden sollen.

7. Mehrlagiges Isoliermaterial gemäß Anspruch 1, **dadurch gekennzeichnet, dass** es eine Wasserdampfdurchlässigkeit Sd enthält, die unter 0,25 m liegt.

8. Mehrlagiges Isoliermaterial gemäß Anspruch 1, **dadurch gekennzeichnet, dass** diese mindestens eine Matte (6, 7, 16, 17, 26, 27) aus einem Material besteht, das zur Gruppe aus Leinen, Baumwolle, Polyester, Schafwolle und Hanf gehört.

9. Mehrlagiges Isoliermaterial gemäß Anspruch 1, **dadurch gekennzeichnet, dass** die genannte mindestens eine Matte (6, 7, 16, 17, 26, 27) eine Flächendichte zwischen 50 und 200 g/m² aufweist.

10. Mehrlagiges Isoliermaterial gemäß Anspruch 1, **dadurch gekennzeichnet, dass** es eine Dampfsperrfolie (40) enthält, die gegenüber einer Außenseite (45) des ersten reflektierenden Gitters (5) angeordnet ist.

## Claims

1. Multilayer insulator (1, 11, 21) intended to provide thermal insulation for a building, and incorporating:
- a screen (4) that is highly permeable to water vapor contained in the building;
- at least one mat (6, 7, 16, 17, 26, 27) formed in an insulating material;
- one first reflector grille (5) incorporating perforations (35) allowing the water vapor contained in the building to pass through the said multilayer insulator (1, 11, 21);
- at least one stitching thread (3) that assembles the selvedges (24) of the highly-vapor-permeable screen (4) onto the opposing selvedges (25) of the first reflector grille (5), so as to form a pocket (9, 10) of cushion type, within which is positioned the said mat (6, 7, 16, 17, 26, 27), of which there is at least one;
**characterized by** the fact that it incorporates a second reflector grille (15) having perforations (35), with the said second reflector grille (15) being positioned between the highly-vapor-permeable screen (4) and the first reflector grille (5), and assembled by means of the longitudinal stitching to, firstly, the highly-vapor-permeable screen (4) and, secondly, the first reflector grille (5), so as to form the said pocket (10).

2. Multilayer insulator in accordance with claim 1, **characterized by** the fact that it incorporates at least one perforated reflector film (8, 18, 28) positioned inside the pocket (10) and incorporating perforations (38).

3. Multilayer insulator in accordance with one of claims 1 and 2, **characterized by** the fact that the perforations (38, 38) of the said first and second reflector grilles (5, 15) and the said reflector film (8, 18, 28) have a diameter of between 0.4 and 1.2 mm.

4. Multilayer insulator in accordance with one of claims 1 and 2, **characterized by** the fact that the perforations (38, 38) of the said first and second reflector grilles (5, 15) and the said reflector film (8, 18, 28) are distributed over each of the different layers, in accordance with an average dispersal of between 4 and 10 perforations per cm².

5. Multilayer insulator in accordance with claim 1, **characterized by** the fact that the said stitching thread (3) is assembled with the selvedges (24) of the highly-vapor-permeable screen (4) and the selvedges (25) opposite the first reflector grille (5), using a stitch from the group including overlock stitching and straight seam.

6. Multilayer insulator in accordance with claim 1, **characterized by** the fact that it incorporates glue points (12) designed to intermittently assemble the different layers of insulator.

7. Multilayer insulator in accordance with claim 1, **characterized by** the fact that it has a water vapor permeability Sd of less than 0.25 m.

8. Multilayer insulator in accordance with claim 1, **characterized by** the fact that the said mat (6, 7, 16, 17, 26, 27) - of which there is at least one - is formed in a material chosen from the group including linen, quilting, polyester, sheep's wool and hemp.

9. Multilayer insulator in accordance with claim 1, **characterized by** the fact that the said mat (6, 7, 16, 17, 26, 27) - of which there is at least one - has a surface density of between 50 and 200 g per m².

10. Multilayer insulator in accordance with claim 1, **characterized by** the fact that it incorporates a vapor-barrier film (40) positioned opposite one exterior face (45) of the first reflector grille (5).
